# EUROPÄISCHE PATENTSCHRIFT

(11) **EP 2 103 549 B1**
(45) Veröffentlichungstag und Bekanntmachung des Hinweises auf die Patenterteilung: **27.02.2013**
(21) Anmeldenummer: 08020595.8
(22) Anmeldetag: 27.11.2008
(51) Int. Cl.: B65D 81/05, B60P 7/06, B60P 7/18

(54) **Kantenschutz für empfindliche Transportgüter**
Edge protection for fragile load
Protection des bords de marchandises sensibles

(30) Priorität: 19.03.2008 DE 202008003904 U
(43) Veröffentlichungstag der Anmeldung: 23.09.2009
(73) Patentinhaber: Schmedding, Peter-Michael, 31311 Uetze-Dedenhausen (DE)
(72) Erfinder: Schmedding, Peter-Michael, 31311 Uetze-Dedenhausen (DE)
(74) Vertreter: Wagner, Carsten

(56) Entgegenhaltungen:
- FR-A- 1 369 534
- JP-A- 7 215 357
- JP-U- 51 051 993
- US-A- 5 848 865

## Beschreibung

Die Erfindung betrifft einen Kantenschutz der im Oberbegriff des Anspruchs 1 genannten Art für empfindliche Transportgüter.

Plattenartige Transportgüter, beispielsweise aus Kunststoff oder einem Fasermaterial bestehende Dämmplatten, werden in Stapeln transportiert, wobei jeder Stapel eine Vielzahl von Dämmplatten enthält, die durch Zurrgurte miteinander verzurrt sind. Um eine Beschädigung der Dämmplatten durch die Krafteinwirkung der Zurrgurte zu vermeiden, wird häufig ein Kantenschutz eingesetzt.

Durch US 5,848, 865, und durch DE 199 04 843 B4 (entsprechend DE 299 15 284) ist ein Kantenschutz der betreffenden Art für empfindliche Transportgüter bekannt, der einen winkelartigen Grundkörper mit zwei Schenkeln aufweist, die in einem Verbindungsbereich miteinander verbunden sind. Die Schenkel weisen jeweils wenigstens einen über die Schenkelfläche hervorstehenden Vorsprung zur Anlage eines Zurrgurtes in Transportposition des Kantenschutzes auf. Bei dem bekannten Kantenschutz dienen die Vorsprünge zur Entlastung des Verbindungsbereiches, um so die durch den Verbindungsbereich auf eine Kante des Transportgutes, an dem der Kantenschutz anliegt, ausgeübte Druckkraft zu verringern.

Nachteilig bei dem bekannten Kantenschutz ist, daß weiterhin die Gefahr besteht, daß die von dem Zurrgurt auf den Verbindungsbereich ausgeübte Druckkraft die Kante eines Transportgutes, an dem der Kantenschutz anliegt, beschädigt.

Der Erfindung liegt die Aufgabe zugrunde, einen Kantenschutz der im Oberbegriff des Anspruchs 1 genannten Art anzugeben, bei dem die Gefahr einer Beschädigung einer Kante des Transportgutes weiter verringert ist.

Diese Aufgabe wird durch die im Anspruch 1 angegebene Lehre gelöst.

Der Grundgedanke der erfindungsgemäßen Lehre besteht darin, daß sich eine Beschädigung der Kante des Transportgutes durch den Verbindungsbereich vermeiden läßt, wenn der Verbindungsbereich durch den Zurrgut in Transportposition des Kantenschutzes unbelastet oder im wesentlichen unbelastet ist. Hierzu sieht die erfindungsgemäße Lehre vor, daß die Vorsprünge derart ausgebildet und relativ zueinander angeordnet sind, daß der Zurrgut in Transportposition zu dem Verbindungsbereich beabstandet verläuft, derart, daß der Verbindungsbereich durch den Zurrgut in Transportposition unbelastet oder im wesentlichen unbelastet ist. Auf diese Weise sind Beschädigungen der Kanten der Transportgüter besonders zuverlässig vermieden. Damit sind durch Kundenreklamationen verursachte Kosten vermeidbar.

Der erfindungsgemäße Kantenschutz ist einfach und kostengünstig herstellbar. Darüber hinaus ist er robust und vielfach verwendbar.

Der Grundkörper des erfindungsgemäßen Kantenschutzes kann in beliebiger geeigneter Weise ausgebildet sein. Eine vorteilhafte Weiterbildung der erfindungsgemäßen Lehre sieht vor, daß der Grundkörper als Hohlprofil ausgebildet ist, wobei die Vorsprünge durch Wandungen von Kammern des Hohlprofils gebildet sind. Bei dieser Ausführungsform ist der Grundkörper besonders einfach und kostengünstig herstellbar und besonders robust.

Bei der vorgenannten Ausführungsform können die Kammern einen beliebigen geeigneten Querschnitt haben, beispielsweise einen bogenförmig begrenzten, runden oder ovalen Querschnitt. Eine vorteilhafte Weiterbildung sieht insoweit vor, daß die Kammern einen im wesentlichen rechteckigen oder trapezförmigen Querschnitt aufweisen. Auf diese Weise ist die Herstellung des Grundkörpers des erfindungsgemäßen Kantenschutzes weiter vereinfacht.

Grundsätzlich kann der Grundkörper aus einem beliebigen geeigneten Material, beispielsweise Aluminium bestehen. Um den erfindungsgemäßen Kantenschutz noch kostengünstiger zu gestalten, sieht eine vorteilhafte Weiterbildung der Erfindung vor, daß der Grundkörper aus Kunststoff besteht. Hierbei kann der Kunststoff vorzugsweise PE (Polyethylen) oder PP (Polypropylen) sein, wie dies eine Weiterbildung vorsieht. Anstelle von PE oder PP können jedoch auch beliebige andere geeignete Thermoplaste verwendet werden.

Auf diese Weise ist die Herstellung des erfindungsgemäßen Kantenschutzes weiter vereinfacht, wobei es insbesondere möglich ist, einen Kantenschutz mit einer gewünschten Länge dadurch herzustellen, daß ein extrudiertes Profil abgelängt wird. Diese Weiterbildung hat in Kombination mit den Merkmalen des Oberbegriffs des Anspruchs 1 einen eigenständige erfinderische Bedeutung, auch ohne die Merkmale des Kennzeichens des Anspruchs 1.

Bei den Ausführungsformen mit dem Kammern aufweisenden Hohlprofil kann durch Form und Größe der Kammern gewählt werden, in welchem Maße die Vorsprünge unter der Druckbelastung des Zurrgurtes in Transportposition elastisch federnd nachgeben. Falls bei der jeweiligen Anwendung ein elastisches Nachgeben der Vorsprünge in hohem Maße nicht erwünscht ist, so sieht eine andere vorteilhafte Weiterbildung der erfindungsgemäßen Lehre vor, daß wenigstens eine der Kammern durch Versteifungsmittel gegen eine Druckbelastung des Zurrgurtes in Transportposition versteift ist.

Um bei der vorgenannten Ausführungsform eine besonders gute Versteifungswirkung zu erhalten, sieht eine Weiterbildung dieser Ausführungsform vor, daß die Versteifungsmittel wenigstens einen Steg aufweisen, der sich von einer Außenfläche des zugeordneten Schenkels zu einer gegenüberliegenden Innenwandung der Kammer erstreckt. Um die durch die Stege erzielte Versteifungswirkung in Schenkelrichtung gleichmäßiger zu gestalten, sieht eine Weiterbildung der vorgenannten Ausführungsform vor, daß wenigstens zwei in Schenkelrichtung des zugeordneten Schenkels beabstandete Stege vorgesehen sind.

Um in Transportposition des Kantenschutzes ein Verrutschen des Zurrgurtes zu vermeiden, sieht eine andere vorteilhafte Weiterbildung der erfindungsgemäßen Lehre vor, daß der Grundkörper, insbesondere im Bereich der Vorsprünge, mit rutschhemmenden Mitteln, insbesondere einer Oberflächenprofilierung, versehen ist.

Um den Grundkörper besonders leicht zu gestalten und damit während des Transports unnötiges Transportgewicht zu vermeiden, sieht eine andere vorteilhafte Weiterbildung der erfindungsgemäßen Lehre vor, daß der Grundkörper mit Ausnehmungen, insbesondere Durchbrüchen, versehen ist.

Die Erfindung wird nachfolgend anhand der beigefügten Zeichnung näher erläutert, in der Ausführungsbeispiele eines erfindungsgemäßen Kantenschutzes dargestellt sind. Dabei bilden alle beschriebenen, in der Zeichnung dargestellten und in den Patentansprüchen beanspruchten Merkmale für sich genommen sowie in beliebiger Kombination miteinander den Gegenstand der Erfindung, unabhängig von ihrer Zusammenfassung in den Patentansprüchen sowie deren Rückbeziehung sowie unabhängig von ihrer Beschreibung bzw. Darstellung in der Zeichnung.

Es zeigt:
- Fig. 1: eine Seitenansicht eines ersten Ausführungsbeispiels eines erfindungsgemäßen Kantenschutzes und
- Fig. 2: in gleicher Darstellung wie Fig. 1 ein zweites Ausführungsbeispiel eines erfindungsgemäßen Kantenschutzes.

In den Figuren der Zeichnung sind gleiche bzw. sich entsprechende Bauteile mit gleichen Bezugszeichen versehen.

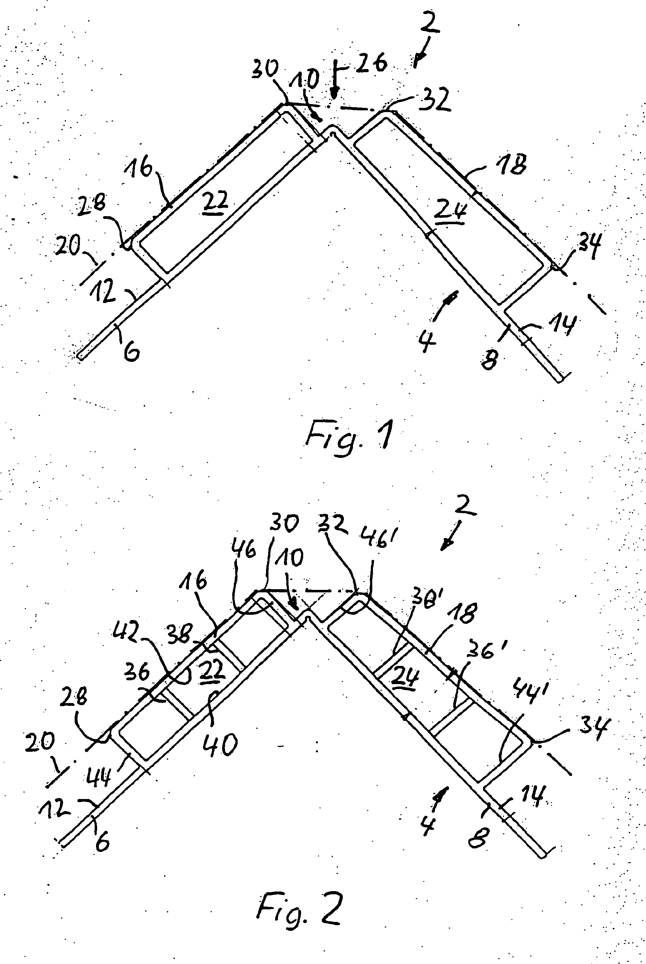

Fig. 1 zeigt eine Ansicht eines ersten Ausführungsbeispiels eines erfindungsgemäßen Kantenschutzes 2, der einen im Querschnitt winkelartigen Grundkörper 4 mit zwei Schenkeln 6, 8 aufweist, die in einem Verbindungsbereich 10 miteinander verbunden sind. Die Schenkel 6, 8 weisen jeweils einen über die Schenkelfläche 12 bzw. 14 hervorstehenden Vorsprung 16 bzw. 18 zur Anlage eines in Fig. 1 durch eine strichpunktierte Linie symbolisierten Zurrgurtes 20 auf.

Bei dem dargestellten Ausführungsbeispiel ist der Grundkörper 4 als Hohlprofil aus Kunststoff ausgebildet, wobei die Vorsprünge 16, 18 durch Wandungen von Kammern 22, 24 des Hohlprofils gebildet sind. Wie aus Fig. 1 ersichtlich ist, weist bei diesem Ausführungsbeispiel die Kammer 22 einen im wesentlichen rechteckförmigen Querschnitt auf, während die Kammer 24 einen im wesentlichen trapezförmigen Querschnitt aufweist, wobei die kürzere Seite des Trapezes dem Verbindungsbereich 10 zugewandt ist. Bei dem dargestellten Ausführungsbeispiel besteht der Grundkörper aus PE (Polyethylen) und ist durch Extrudieren hergestellt. Eine gewünschte Länge des Kantenschutzes 2 senkrecht zur Zeichenebene wird dadurch erreicht, daß das extrudierte Profilmaterial entsprechend abgelängt wird.

Erfindungsgemäß sind die Vorsprünge 16, 18 derart ausgebildet und relativ zueinander angeordnet, daß der Zurrgut 20 in Transportposition zu dem Verbindungsbereich 10 beabstandet verläuft, wie dies aus Fig. 1 ersichtlich ist, derart, daß der Verbindungsbereich durch den Zurrgut 20 in Transportposition unbelastet oder im wesentlichen unbelastet ist. Aufgrund des Abstandes zwischen dem Zurrgut 20 und dem Verbindungsbereich 10 wird eine beim Spannen des Zurrgurtes in Richtung eines Pfeiles 26 wirkende Druckkraft nicht in den Verbindungsbereich 10 und damit nicht in eine an der Innenseite des Verbindungsbereiches 10 anliegende Kante eines zu schützenden Transportgutes eingeleitet. Eine Beschädigung einer solchen Kante ist damit ausgeschlossen.

Der erfindungsgemäße Kantenschutz 2 schützt damit Transportgüter zuverlässig vor Beschädigungen. Er ist relativ einfach und kostengünstig herstellbar, insbesondere aufgrund der Tatsache, daß der Grundkörper 4 durch Extrudieren hergestellt ist.

Unter der Druckkraft des Zurrgurtes 20 können die Vorsprünge 16, 18 elastisch federnd nachgeben, wobei das Maß der Elastizität durch die Form der Vorsprünge 16, 18 sowie die Wandstärke der Wandungen der Kammern 22, 24 wählbar ist.

Um eine Beschädigung des Zurrgurtes 20 zu vermeiden, sind die Vorsprünge 16, 18 an ihren Ecken 28, 30 bzw. 32, 34 abgerundet, wie in Fig. 1 dargestellt.

In Fig. 2 ist ein zweites Ausführungsbeispiel eines erfindungsgemäßen Kantenschutzes dargestellt, das sich von dem Ausführungsbeispiel gemäß Fig. 1 dadurch unterscheidet, daß bei diesem Ausführungsbeispiel beide Vorsprünge 16, 18 durch Versteifungsmittel gegen eine Druckbelastung des Zurrgurtes 20 versteift sind. Nachfolgend werden ausschließlich die dem Vorsprung 16 zugeordneten Versteifungsmittel näher erläutert. Die dem Vorsprung 18 zugeordneten Versteifungsmittel sind entsprechend aufgebaut, und ihre Bauteile sind mit Bezugszeichen versehen, die den Bezugszeichen der Versteifungsmittel des Vorsprungs 16 entsprechen.

Die Versteifungsmittel weisen bei diesem Ausführungsbeispiel Stege 36, 38 auf, die sich von der Außenfläche des Schenkels 6 zu einer gegenüberliegenden Innenwandung 42 der Kammer 22 erstrecken. Wie aus Fig. 2 ersichtlich ist, sind die Stege 36, 38 in Schenkelrichtung des Schenkels 6 zueinander beabstandet und so zwischen seitlichen Wandungen 44, 46 der Kammer 42 angeordnet, daß der Abstand der Stege 36, 38 in Schenkelrichtung im wesentlichen dem Abstand des Steges 36 von der seitlichen Wandung 44 bzw. dem Abstand des Steges 38 in Schenkelrichtung von der seitlichen Wandung 46 entspricht. Auf diese Weise ergibt sich eine in Schenkelrichtung gleichmäßige Stabilität des Vorsprungs 16 gegen eine Druckbelastung des Zurrgurtes 20. Im Vergleich zu dem Ausführungsbeispiel gemäß Fig. 1 ist damit bei dem Ausführungsbeispiel gemäß Fig. 2 die Elastizität des Vorsprungs 16 verringert.

Falls entsprechend den jeweiligen Anforderungen erforderlich, kann sich der Querschnitt der Schenkel 6, 8 in deren Längsrichtung verändern. Insbesondere kann sich der Querschnitt der Schenkel 6, 8 von dem Verbindungsbereich 10 zu dem freien Ende der Schenkel 6, 8 hin verjüngen.

## Patentansprüche

1. Kantenschutz für empfindliche Transportgüter,
mit einem im Querschnitt winkelartigen Grundkörper (4) mit zwei Schenkeln (6, 8), die in einem Verbindungsbereich (10) miteinander verbunden sind,
wobei die Schenkel (6, 8) jeweils wenigstens einen über die Schenkelfläche hervorstehenden Vorsprung zur Anlage eines Zurrgurtes (20) in Transportposition des Kantenschutzes aufweisen,
wobei
die Vorsprünge (16, 18) derart ausgebildet und relativ zueinander angeordnet sind, daß der Zurrgurt (20) in Transportposition zu dem Verbindungsbereich (10) beabstandet verläuft, derart, daß der Verbindungsbereich (10) durch den Zurrgurt (20) in Transportposition unbelastet oder im wesentlichen unbelastet ist und
**dadurch gekennzeichnet**
**daß** der Grundkörper (4) durch Extrudieren hergestellt ist.

2. Kantenschutz nach Anspruch 1, **dadurch gekennzeichnet, daß** der Grundkörper (4) als Hohlprofil ausgebildet ist, wobei die Vorsprünge (16, 18) durch Wandungen (22, 24) von Kammern des Hohlprofils gebildet sind.

3. Kantenschutz nach Anspruch 2, **dadurch gekennzeichnet, daß** die Kammern (22, 24) einen im wesentlichen rechteckigen oder trapezförmigen Querschnitt aufweisen.

4. Kantenschutz nach einem der vorhergehenden Ansprüche, **dadurch gekennzeichnet, daß** der Grundkörper (4) aus Kunststoff besteht.

5. Kantenschutz nach Anspruch 4, **dadurch gekennzeichnet, daß** der Kunststoff PE oder PP ist.

6. Kantenschutz nach einem der vorhergehenden Ansprüche, **dadurch gekennzeichnet, daß** wenigstens einer der Vorsprünge (16, 18) durch Versteifungsmittel gegen eine Druckbelastung des Zurrgurtes (20) in Transportposition versteift ist.

7. Kantenschutz nach Anspruch 6, **dadurch gekennzeichnet, daß** die Versteifungsmittel wenigstens einen Steg (36, 38 bzw. 36', 38') aufweisen, der sich von der Außenfläche (40 bzw. 40') des zugeordneten Schenkels (6 bzw. 8) zu einer gegenüberliegenden Innenwandung (42 bzw. 42') der Kammer (22 bzw. 24) erstreckt.

8. Kantenschutz nach Anspruch 6, **dadurch gekennzeichnet, daß** wenigstens zwei in Schenkelrichtung des zugeordneten Schenkels (6 bzw. 8) beabstandete Stege (36, 38 bzw. 36', 38') vorgesehen sind.

9. Kantenschutz nach einem der vorhergehenden Ansprüche, **dadurch gekennzeichnet, daß** der Grundkörper (4) insbesondere im Bereich der Vorsprünge (16, 18) mit rutschhemmenden Mitteln, insbesondere einer Oberflächenprofilierung, versehen ist.

10. Kantenschutz nach einem der vorhergehenden Ansprüche, **dadurch gekennzeichnet, daß** der Grundkörper (4) mit Ausnehmungen, insbesondere Durchbrüchen, versehen ist.

## Claims

1. Edge protection for fragile transported goods,
comprising a main body (4) that is angular in cross section with two sides (6, 8) which are joined together in a joining area (10),
wherein the sides (6, 8) each have at least one projection extending over the side surface for supporting a lashing strap (20) in the transport position of the edge protection,
wherein the projections (16, 18) are configured and arranged relative to one another so that in transport position the lashing strap (20) is spaced apart from the joining area (10) such that the joining area (10) is not loaded by the lashing strap (20) in transport position or is substantially unloaded and **characterised in that** the main body (4) is produced by extrusion.

2. Edge protection according to claim 1, **characterised in that** the main body (4) is configured as a hollow profile, wherein the projections (16, 18) are formed by walls (22, 24) of chambers of the hollow profile.

3. Edge protection according to claim 2, **characterised in that** the chambers (22, 24) have a substantially rectangular or trapezoidal cross section.

4. Edge protection according to any one of the preceding claims, **characterised in that** the main body (4) is made of plastic.

5. Edge protection according to claim 4, **characterised in that** the plastic is PE or PP.

6. Edge protection according to any one of the preceding claims, **characterised in that** at least one of the projections (16, 18) is reinforced by reinforcing means against pressure loading from the lashing strap (20) in transport position.

7. Edge protection according to claim 6, **characterised in that** the reinforcing means comprise at least one web (36, 38 or 36', 38') which extends from the outer surface (40 or 40') of the respective side (6 or 8) to the opposite inner wall (42 or 42') of the chamber (22 or 24).

8. Edge protection according to claim 6, **characterised in that** at least two webs (36, 38 or 36', 38') are provided which are spaced apart from one another along the respective side (6 or 8).

9. Edge protection according to any one of the preceding claims, **characterised in that** the main body (4) is provided, particularly in the area of the projections (16, 18), with anti-slip means, in particular a surface profiling.

10. Edge protection according to any one of the preceding claims, **characterised in that** the main body (4) is provided with recesses, in particular openings.

## Revendications

1. Rebord de protection pour des marchandises fragiles à transporter,
comportant un corps de base (4) en équerre sur une coupe transversale, muni de deux branches (6, 8), reliées l'une à l'autre dans une zone d'assemblage (10),
lesdites branches (6, 8) comportant chacune au moins une saillie s'avançant au-delà de la surface des branches et destinée à recevoir en appui une sangle d'amarrage (20) dans la position de transport du rebord de protection,
lesdites saillies (16, 18) étant configurées et agencées l'une par rapport à l'autre de telle sorte que, dans la position de transport, la sangle d'amarrage (20) s'étend à distance de la zone d'assemblage (10) de sorte que ladite zone d'assemblage (10) n'est pas sollicitée ou pratiquement pas sollicitée par la sangle d'amarrage (20) dans la position de transport, et
**caractérisé en ce que** le corps de base (4) est réalisé par extrusion.

2. Rebord de protection selon la revendication 1, **caractérisé en ce que** le corps de base (4) est réalisé sous forme de profilé creux, les saillies (16, 18) étant formées par des parois (22, 24) des chambres du profilé creux.

3. Rebord de protection selon la revendication 2, **caractérisé en ce que** les chambres (22, 24) ont une section transversale sensiblement carrée ou trapézoïdale.

4. Rebord de protection selon l'une quelconque des revendications précédentes, **caractérisé en ce que** le corps de base (4) est réalisé en matière plastique.

5. Rebord de protection selon la revendication 4, **caractérisé en ce que** la matière plastique est un polyéthylène (PE) ou un polypropylène (PP).

6. Rebord de protection selon l'une quelconque des revendications précédentes, **caractérisé en ce qu'**au moins une des saillies (16, 18) est rigidifiée par des moyens de renforcement empêchant une sollicitation de pression sur la sangle d'amarrage (20) dans la position de transport.

7. Rebord de protection selon la revendication 6, **caractérisé en ce que** les moyens de renforcement comportent au moins une nervure (36, 38 ou 36', 38') qui s'étend depuis la face extérieure (40 ou 40') de la branche (6 ou 8) correspondante vers une paroi intérieure (42 ou 42'), située en face, de la chambre (22 ou 24).

8. Rebord de protection selon la revendication 6, **caractérisé en ce qu'**il est prévu au moins deux nervures (36, 38 ou 36', 38') écartées l'une de l'autre dans l'orientation de la branche (6 ou 8) correspondante.

9. Rebord de protection selon l'une quelconque des revendications précédentes, **caractérisé en ce que** le corps de base (4), en particulier dans la zone des saillies (16, 18), est muni de moyens antidérapants, en particulier un profilage en surface.

10. Rebord de protection selon l'une quelconque des revendications précédentes, **caractérisé en ce que** le corps de base (4) comporte des évidements, en particulier des ajours.
